Europäisches Patentamt

European Patent Office

Office européen des brevets

(19)

(11) Publication number: **0 296 729**
**A1**

## (12) EUROPEAN PATENT APPLICATION

(21) Application number: 88305122.9

(22) Date of filing: 06.06.88

(51) Int. Cl.⁴: **D21D 3/00 , D21H 3/34 , D21H 3/28 , C09F 1/04**

(30) Priority: 24.06.87 GB 8714725

(43) Date of publication of application:
28.12.88 Bulletin 88/52

(84) Designated Contracting States:
AT BE CH DE ES FR GB GR IT LI LU NL SE

(71) Applicant: Albright & Wilson Limited
210-222 Hagley Road West
Oldbury Warley West Midlands B68 0NN(GB)

(72) Inventor: Jones, Mervyn Francis
38 Kewstoke road
Stoke Bishop Bristol BS9 1HG(GB)

(74) Representative: Oliver, Roy Edward et al
POLLAK MERCER & TENCH High Holborn
House 52-54 High Holborn
London WC1V 6RY(GB)

(54) **Surface sizing compositions.**

(57) Paper and paper-like products are treated with a composition made by fortifying rosin with an $\alpha, \beta$ - unsaturated organic acid or anhydride and subjecting the resultant product to esterification with a polyoxyalkylene glycol, the effect of the treatment being to increase the coefficient of friction of the paper surface. Improved sizing is obtained by treating the paper in addition with a retention aid, such as a polyaluminium chloride.

EP 0 296 729 A1

## SURFACE SIZING PROCESSES UTILISING PEG ROSIN ESTERS

This invention relates to processes for the surface sizing of paper or like products, after drying, and also to methods for the manufacture of treatment compositions for such purposes. Surface sizing is normally used to supplement the action of conventional sizing compositions, which are applied to undried paper, in order to provide a consistently high level of water repellency in the paper.

One problem whioh may be encountered as a result of applying a conventional surface sizing composition to paper is a reduction in the coefficient of friction of the sized surface. This problem is especially prevalent when the sizing composition comprises a synthetic sizing agent, such as alkyl ketene dimer. The problem can lead to difficulties in the subsequent processing of the paper, e.g. due to slippage of paper sheets between the rollers.

It has now been discovered that, when paper is surface sized with a polyoxyalkylene ester of a fortified rosin, the treated product exhibits a higher coefficient of friction. Surface sizing processes based upon this discovery are believed to be novel and thus, in accordance with one aspect of this invention, a process is provided for the sizing of paper which comprises the application of a polyoxyalkylene ester of a fortified rosin to the surface thereof.

The esters which are useful in carrying out the invention may be obtained by the esterification of a so-called fortified rosin with a polyoxyalkylene glycol. Fortified rosin is a rosin which has been modified by reaction with a dienophile, such as an $\alpha,\beta$-unsaturated organic acid or the anhydride of such an acid. The most commonly employed dienophiles are those acids and anhydrides which comprise from 3 to 10 and preferably from 3 to 6 carbon atoms, the most preferred dienophiles being maleic acid, maleic anhydride and fumaric acid. The amount of dienophile which is reacted with rosin may vary within wide limits, say from 3% to 20% by weight of the weight of the rosin and, more usually and advantageously, is within the range from 3% to 18% by weight and most preferably from 3% to 11% by weight of the rosin. This degree of reaction of the rosin and the dienophile may represent complete fortification, i.e. the maximum possible quantity of dienophile is reacted with the rosin, but more usually it represents partial fortification of the rosin.

Rosin is a solid resinous material which occurs naturally in the oleoresin of pine trees. It is obtained from three main sources; gum rosin, i.e. the oleoresin exudate of living pine trees, wood rosin, i.e. the oleoresin contained in the aged stumps of pine trees, and from tall oil, which is a by-product of the Kraft paper industry. Rosin comprises a mixture of rosin acids, primarily abietic acid, pimaric acid and palustric acid, together with a minor proportion of hydrocarbons and high molecular weight alcohols. The components of rosin are not normally separated prior to fortification and need not be separated for the purposes of this invention. The preferred rosin component for use in the fortification step of the present process is gum rosin.

The product obtained from the fortification reaction, i.e. the fortified rosin, comprises a mixture of the tribasic acids obtained as products of the Diels Alder addition of the dienophile to the rosin acids, together with any unreacted rosin acids, together normally with the remaining components of the rosin. The components of this fortified rosin reaction mixture are not normally separated, prior to carrying out the esterification step with a polyalkylene glycol. The use of polyoxyethylene glycols is preferred. Polyoxypropylene glycols and mixed polyoxyethylene/polyoxypropylene glycols may be used, but the products derived from them are less suited for use in the processes of this invention and so are not preferred. The esterification step may be carried out using any of the conventional techniques employed for esterifying non-volatile carboxylic acids and alcohols. Typically, the fortified rosin is melted and the polyalkylene glycol is added, optionally in the presence of an esterification catalyst, such as zinc oxide. Preferably, the mixture is heated to a temperature in the range from 50° to 300°C, preferably from 100° to 200°C, under an inert atmosphere such as nitrogen for a period in the range from 0.5 to 5 hours, preferably from 1 to 3 hours.

The preferred polyethylene glycols for use in this reaction are those having an average molecular weight in the range from 200 to 1000 (which corresponds to a degree of ethoxylation of from 4.5 to 23.0) and more preferably in the range from 400 to 600. Where the invention is carried out by making use of other polyalkylene glycols, the preferred glycols are those which have the same degree of alkoxylation as the preferred polyethylene glycols.

The amount of polyalkylene glycol which is employed in the esterification is preferably at least sufficient to produce the mono-esters of the fortified rosin acid or acids present in the rosin. It is believed that the polyalkylene glycol reacts preferentially with the carboxylic acid groups, present in the fortified rosin acids, which are derived from the dienophile added during the fortification reaction. The product of the esterification reaction may comprise a mixture of the mono- and di-esters of the fortified rosin and the mono-esters of any unfortified rosin acids present, as well as any unesterified acids, and such mixtures may be used in the preparation of compositions of the invention, that is, without separation.

Certain of the products of the esterification process are either solids or very viscous liquids which cannot readily be incorporated into a sizing composition. This tendency is particularly noticeable when the polyalkylene glycol used in the esterification reaction has a relatively low molecular weight, say less than 600. In such cases, it may be necessary, in order to obtain the benefits of the invention to the full, in practice, to blend the esterification product with a sufficient quantity of an inert solvent or diluent, which serves to reduce its viscosity to an acceptable level. Thus, a preferred feature of this aspect of the invention is the inclusion in the paper treatment composition of an inert solvent or diluent. Examples of suitable diluents include pine oil and rosin oil.

While diluents or viscosity reducing agents such as pine oil and rosin oil are effective, they have relatively strong aromas, especially the latter, and may be used in such quantities as to impart a turpentine-like smell to treated paper products. Another effective class of solvents or diluents for solid or viscous liquid fortified rosin ester products is represented by polyalkylene glycols per se, such as the preferred polyethylene glycols. Thus, a convenient expedient for imparting the desired reduced viscosity to a paper treatment composition is to use for dilution purposes a sufficient quantity of the same polyalkylene glycol employed in the earlier esterification step.

The processes of the present invention preferably also comprise the application of a starch to the surface of the paper. This can be carried out before, during or after treatment with the fortified rosin composition itself.

The starch which is employed in the processes of this invention may be any anionic, nonionic or cationic starch, such as those which are currently employed in surface sizing. The preferred starches for present use are the cationic starches. Examples of starches which may be used in the compositions of this invention are quaternised starches, especially quaternised maize starches such as those sold under the Trade Marks Cato 160 and Stalock 140 and the products sold under the Trade Marks Resistamyl K20 and Hicat SP50.

The polyalkylene glycol rosin esters may be and, most preferably, are used in conjunction with a retention aid in the paper treatment process. It has been discovered that the use of one or other of selected retention aids, in combination with the ester, serves to impart superior sizing, i.e. a higher degree of liquid repellency, to the paper, as well as increasing the co-efficient of friction of the paper. Such processes involving the application of both a fortified rosin ester composition and a retention aid constitute a preferred aspect of the present invention. The preferred retention agents for use in carrying out the invention are (1) polyaluminium chlorides, (2) polyamide/ephichlorohydrin resin condensates, such as those sold under the Trade Mark BC767, (3) urea/formaldehyde resin condensates such as those sold under the Trade Mark BC768, (4) modified polyether imines, such as those sold under the Trade Mark Polymin SK, (5) polyacrylamides, such as those sold under the Trade Mark Percol 280L, (6) melamine/formaldehyde condensates, such as those sold under the Trade Mark L6504, (7) dicyandiamide formaldehyde condensates, such as those sold under the Trade Mark Fixing Agent FP45(BASF), (8) dimethylamine/epichlorohydrin/ethylenediamine polymers, such as those sold under the Trade Mark Percol 1597, and (9) papermakers alum (aluminium sulphate). The most preferred retention aids are the polyaluminium chlorides, especially those having either the formula:

$Al(OH)_x(Cl)_y$

where x has a value in the range from 1.35 to 1.65 and y has a value of 3-x,

or the formula:

$Al(OH)_x(SO_4)_y Cl_z$

where x has a value in the range from 1.35 to 1.65, y has a value in the range from 0.08 to 0.15 and z has a value of 3-(x + y). A particular type of polyaluminium chloride which may be used as a retention aid is well represented by that described in European Patent Application 145686 and by those produced by the processes described in European Patent Application 181847.

The surface sizing processes of the present invention may be carried out using any of the techniques which are known in the art. Most conveniently, the ester is applied by way of the size press, but it can also be applied by electronic spraying, curtain coating or by way of the calender stack water-box, of the sizing section of a paper-making plant. The preferred method of application is to meter the ester continuously into the size press circuit. The amount of ester which is introduced may vary within wide limits, but in general will be sufficient to provide a pick-up of from 0.02% to 1.0% by weight of the product of the esterification reaction (the fortified rosin ester), based upon the dry weight of the treated paper. As noted above, the product of the esterification reaction may and usually will be a mixture comprising esters and unreacted acids and the performance of this product as a friction modifier and also as a surface size will vary to an extent with the composition of the mixture. This variation may conveniently be ignored in the determination

3

of the optimum quantity of any particular mixture which should be employed in a particular sizing process.

The amount of starch which is employed in the sizing process, when this preferred embodiment of the invention is practised, is preferably such as will provide a pick-up in the range from 3.0% to 12% by weight of starch based on the dry weight of the paper.

The retention aid which is also employed in the preferred form of the process of this invention may also be introduced into any convenient point in the size process and most conveniently by metering the retention aid into the size press circuit. The amount of retention aid which is employed may vary within wide limits, but in general will be sufficient to maintain the ratio of the dry weight of the retention aid to the dry weight of the polyoxyalkylene ester within the range from 1:1 to 1:20 and, most preferably, within the range from 1:1 to 1:10.

The processes of the present invention may be employed to treat and to size both unalumed paper and unalumed paper-board.

The invention is illustrated by the following examples.

Examples A-C describe the preparation of fortified rosin feedstocks. Examples 1-8 describe the preparation of the fortified rosin glycol esters of our invention. Examples 9 to 22 describe the preparation of paper treatment compositions of this invention, by adjusting the viscosity of the rosin ester products selected. Examples 23-56 describe the use of the fortified rosin glycol esters as surface treatment compositions and, especially, as surface sizes. Examples 56-76 describe the use of the fortified rosin glycol esters as coefficient of friction improvers. The Ring and Ball test mentioned is carried out as described in I.P. 58 (1965). All percentages and parts are by weight, unless stated to the contrary.

Examples B and C were carried out substantially as described in Example A, but with variations in those parameters as shown by numerals (i)-(x) in Table I.

## Example A

(i) 3000 parts of (ii) Chinese gum rosin were heated with stirring to a temperature of (iii) 175°C and then (iv) 480 parts of (v) maleic anhydride were added. When the addition was complete, the mixture was held at (vi) 175°C for (vii) 6 hours with stirring. The batch was then allowed to cool to room temperature. The fortified rosin then had a water-soluble acid value equivalent to (viii) 2.7 mg. potassium hydroxide per gram of product and a softening point as determined by the Ring and Ball test of (ix) 119°-120°C.

EP 0 296 729 A1

Table I

| Example | (i)\nParts by Weight Rosin | (ii)\nType of Rosin | (iii)\nTemp. | (iv)\nParts of Di-enophile | (v)\nDi-enophile | (vi)\nTemp. | (vii)\nHours at Temp. | (viii)\nAcid Value of Product mgm KOH/gm | (ix)\n"Ring & Ball" softening Temp. |
|---|---|---|---|---|---|---|---|---|---|
| A | 3000 | Chinese Gum | 175°C | 480 | Maleic anhydride | 175°C | 6 | 2.7 | 119°C |
| B | 3000 | Chinese Gum | 180°C | 480 | Fumaric acid | 180°C | 6 | 13.6 | 132°C |
| C | 1500 | Tall Oil | 150°C | 150 | Maleic anhydride | 175°C | 6 | 2.3 | 91°C |

Examples 2-8 were carried out substantially as hereinafter described for Example 1, but with the parameters (i) to (iii) varied as shown in Table II.

Example 1

(ii) 300 parts of the fortified rosin of (i) Example A were added to a reaction flask equipped with a thermometer, mechanical stirrer, glass tube to provide a bleed of nitrogen gas sub-surface, distillation head, condenser and receiver, and (iii) 256 parts of polyethylene glycol of average molecular weight (iv) 600 was then added and heated. When the whole was melted at about 100°-130°C, the bleed of nitrogen gas was introduced, the stirrer was started and heating was continued until a temperature of 140°-150°C was reached. The mixture was then maintained at 140°C to 150°C for 1 hour. The product ester was then allowed to cool to room temperature, with the nitrogen gas bleed continuing.

Table II

| Example | (i) Rosin Product of | (ii) Parts by Weight Rosin | (iii) Parts by Weight PEG | (iv) Mole Weight of PEG | Hours at 140°-150°C |
|---|---|---|---|---|---|
| 2 | A | 400 | 228 | 400 | 1 |
| 3 | A | 400 | 114 | 200 | 1 |
| 4 | A | 200 | 285 | 1000 | 1 |
| 5 | B | 400 | 256 | 600 | 1 |
| 6 | C | 400 | 74 | 200 | 1 |
| 7 | C | 400 | 148 | 400 | 1 |
| 8 | C | 300 | 166 | 600 | 2 |

The product esters were then blended with a viscosity depressant according to the relevant viscosity of the ester.

Examples 10-22 were carried out substantially as hereinafter described for Example 9, but with the parameters (i)-(ii) varied as shown in Table III.

Example 9

(i) 7 parts of rosin ester product of Example 1 were taken and mixed at room temperature with (ii) 3 parts of pine oil. The resulting blend was a clear mobile light-brown liquid.

Table III

| Example | Rosin Ester Product of Example | (i) Parts by Weight Rosin Ester Product | (ii) Viscosity Diluent | (ii) Parts by Weight of Viscosity Diluent |
|---|---|---|---|---|
| 10 | 2 | 6 | Pine Oil | 4 |
| 11 | 3 | 5 | Pine Oil | 5 |
| 12 | 4 | 5 | Pine Oil | 5 |
| 13 | 5 | 7 | Pine Oil | 3 |
| 14 | 6 | 5 | Pine Oil | 5 |
| 15 | 7 | 6 | Pine Oil | 4 |
| 16 | 8 | 7 | Pine Oil | 3 |
| 17 | 1 | 8 | PEG 400 | 2 |
| 18 | 1 | 5 | PEG 400 | 5 |
| 19 | 1 | 7 | PEG 200 | 3 |
| 20 | 1 | 5 | PEG 200 | 5 |
| 21 | 2 | 5 | PEG 200 | 5 |
| 22 | 3 | 5 | PEG 200 | 5 |

Examples 24-55 were carried out substantially as hereinafter described for Example 23, but with the parameters (i)-(viii) varied as shown in Table IV.

Example 23

This example illustrates the invention by first describing the preparation of a starch solution, the subsequent addition of the rosin ester/pine oil blend as size with a retention aid and the use of this subsequent starch/rosin ester suspension to size paper.

(i) 100 grams of cationic starch Stalok 140 (Trade Name) were added to 1000 gms water and the whole

7

heated to 90° to 95°C and then held at 90° to 95°C for 30 minutes, until the starch had solubilised. The starch solution had a concentration of (ii) 10% by weight starch.

100 grams of this starch solution were then taken at a temperature of between 50° and 60° and a high-speed stirrer was immersed in the liquid and high-speed agitation was started. 2 c.c. of a 1% by weight (iii) polyaluminium chloride solution (as $Al_2O_3$) were then added to the starch solution, giving a total concentration in the starch solution of $Al_2O_3$ of (iv) 0.02% by weight. 0.14 grams of rosin ester/pine oil blend of (v) Example 9 were then added to the starch solution giving an active size concentration of (vi) 0.1% by weight. A sample of "waterleaf" or untreated paper was weighed, passed through this starch/rosin ester suspension, blotted off and reweighed. From the difference in weight, the amount of pick-up can be calculated and, knowing the size concentration, the amount of size deposited in this case was found to be (vii) 0.04% by weight solids to fibre. The treated paper was then passed round a heated dryer at 100°C (4 minutes dwell time), allowed to condition for 10 minutes and then tested for resistance to water penetration by the (viii) 1 minute Cobb test. This example was repeated and the mean Cobb value of the duplicate experiment was 22.9.

Table IV (Part 1 of 2)

| Example | (i) Starch Trade Name | (ii) % by Weight Starch Conc. | (iii) Retention Aid | (iv) % by Weight Retention Aid | (v) Rosin Ester/ Viscosity Depressant Blend Example | (vi) % Size by Weight | (vii) % Size Solids to Fibre | (viii) 1 Minute Cobb Test * |
|---|---|---|---|---|---|---|---|---|
| 24 | Hicat SP50 | 5% | PAC | 0.02 | 9 | 0.14 | 0.06 | 23.5 |
| 25 | Cato 160 | 5% | PAC | 0.02 | 9 | 0.10 | 0.06 | 25.7 |
| 26 | Cato 160 | 5% | PAC | 0.02 | 10 | 0.15 | 0.07 | 24.5 |
| 27 | Stalok 140 | 15% | PAC | 0.02 | 10 | 0.12 | 0.04 | 24.3 |
| 28 | Cato 160 | 5% | PAC | 0.02 | 11 | 0.12 | 0.06 | 26.1 |
| 29 | Stalok 140 | 15% | PAC | 0.02 | 11 | 0.10 | 0.03 | 23.4 |
| 30 | Cato 160 | 5% | PAC | 0.02 | 12 | 0.12 | 0.06 | 30.6 |
| 31 | R. K120 | 5% | PAC | 0.02 | 12 | 0.12 | 0.03 | 34.2 |
| 32 | Cato 160 | 5% | PAC | 0.02 | 13 | 0.10 | 0.05 | 22.6 |
| 33 | R. 120 | 2% | PAC | 0.02 | 13 | 0.10 | 0.06 | 22.0 |
| 34 | Stalok 140 | 10% | PAC | 0.02 | 14 | 0.12 | 0.04 | 23.4 |
| 35 | Cato 160 | 5% | PAC | 0.02 | 14 | 0.12 | 0.05 | 28.3 |
| 36 | Stalok 140 | 10% | PAC | 0.02 | 15 | 0.15 | 0.05 | 27.5 |
| 37 | Cato 160 | 5% | PAC | 0.02 | 15 | 0.15 | 0.07 | 26.5 |
| 38 | Stalok 140 | 10% | PAC | 0.02 | 16 | 0.17 | 0.07 | 23.6 |
| 39 | Cato 160 | 5% | PAC | 0.02 | 16 | 0.17 | 0.08 | 25.7 |

EP 0 296 729 A1

Table IV                    (Part 2 of 2)

| | (i) | (ii) | (iii) | (iv) | (v) | (vi) | (vii) | (viii) |
|---|---|---|---|---|---|---|---|---|
| Example | Starch Trade Name | % by Weight Starch Conc. | Retention Aid | % by Weight Retention Aid | Rosin Ester/ Viscosity Depressant Blend Example | % Size by Weight | % Size Solids to Fibre | 1 Minute Cobb Test * |
| 40 | Hicat SP50 | 5% | Polymin. SK [a] | 0.04 | 9 | 0.52 | 0.28 | 27.3 |
| 41 | Hicat SP50 | 10% | Percol 280L. [b] | 0.04 | 9 | 0.35 | 0.23 | 30.4 |
| 42 | Hicat SP50 | 10% | BC 767 [c] | 0.03 | 9 | 0.14 | 0.09 | 27.6 |
| 43 | Hicat SP50 | 10% | BC 768 [d] | 0.04 | 9 | 0.14 | 0.06 | 31.2 |
| 44 | Hicat SP50 | 10% | L6504 [e] | 0.03 | 9 | 0.14 | 0.06 | 22.4 |
| 45 | Hicat SP50 | 10% | Fixing Agent FP45(BASF) [f] | 0.03 | 9 | 0.14 | 0.08 | 29.8 |
| 46 | Hicat SP50 | 10% | Percol 1597 [g] | 0.04 | 9 | 0.14 | 0.09 | 36.7 |
| 47 | Hicat SP50 | 10% | Alum [h] | 0.05 | 9 | 0.35 | 0.23 | 36.2 |
| 48 | Hicat SP50 | 5% | PAC | 0.02 | 17 | 0.12 | 0.05 | 27.1 |
| 49 | Stalok 140 | 5% | PAC | 0.02 | 17 | 0.12 | 0.05 | 24.5 |
| 50 | Cato 150 | 5% | PAC | 0.02 | 17 | 0.16 | 0.08 | 21.6 |
| 51 | Hicat SP50 | 5% | PAC | 0.02 | 18 | 0.075 | 0.03 | 23.7 |
| 52 | Hicat SP50 | 5% | PAC | 0.02 | 19 | 0.07 | 0.035 | 23.6 |
| 53 | Hicat SP50 | 5% | PAC | 0.02 | 20 | 0.07 | 0.035 | 24.4 |
| 54 | Hicat SP50 | 5% | PAC | 0.02 | 21 | 0.12 | 0.05 | 24.8 |
| 55 | Hicat SP50 | 5% | PAC | 0.02 | 22 | 0.05 | 0.025 | 25.5 |

R. = Resistamyl       *The Cobb Test results are expressed as the mean of duplicate experiments.

EP 0 296 729 A1

In Examples 40 to 47, (a) to (h) can be further described as follows;
 (a) Modified polyethylene imine (BASF)
 (b) Polyacrylamide (Allied Colloids)
 (c) Polyamide/amine/epichlorohydrin condensate (British Industrial Plastics)
 (d) Urea/formaldehyde condensate (British Industrial Plastics)
 (e) Melamine/formaldehyde condensate (British Industrial Plastics)
 (f) Dicyandiamide/formaldehyde condensate
 (g) Dimethylamine/ephichlorohydrin/ ethylenediamine polymer (Allied Colloids)
 (h) Papermakers alum = aluminium sulphate

Examples 57-76 were carried out substantially as hereinafter described for Example 56, with the parameters (i) to (vii) varied as shown in Table V.

## Example 56

This example illustrates the use of the rosin glycol/pine oil blends as coefficient of friction improvers, in that it describes the preparation of a starch solution, the subsequent addition of the rosin ester/pine oil blend as the size, with a retention aid and the use of this subsequent starch/rosin ester suspension to treat paper to improve the static coefficient of friction.

The base paper used to determine any such improvement in the static coefficient of friction was "Orbit" White Bond A4 paper of 85 gsm supplied by Wiggins Teape Stoney Wood Mill. The paper is sized at the wet end with a synthetic size ketene dimer and had a static coefficient of friction of 0.26 - 0.28 and a 1 minute Cobb value of 20-22 as received. (i) 100 grams of cationic starch Stalok 140 (Trade Name) were added to 1000 grams of water and the whole heated to 90° to 95°C with stirring and held at 90°C to 950°C for 30 minutes until the starch had solubilised. The starch solution had a concentration of (ii) 10% by weight starch. 100 grams of this starch solution were then taken to·a temperature of between 50° and 60°C and a high-speed stirrer was immersed in the liquid and high-speed agitation started. 2 c.c. of a 1% by weight of (iii) polyaluminium chloride solution (as $Al_2O_3$) were then added to the starch solution, giving a total concentration in the starch solution of $Al_2O_3$ of (iv) 0.02% by weight. 0.25 grams of rosin ester/pine oil blend of (v) Example 9 were then added to the starch solution, giving an active size concentration of (vi) 0.17% by weight. A sheet of the ketene dimer-sized "Orbit" White Bond A4 paper was weighed, passed through this starch/rosin ester suspension, blotted-off and reweighed. From the difference in weight, the amount of pick-up can be calculated and, knowing the size concentration, the amount of size deposited in this case was found to be (vii) 0.1% by weight solids to fibre. The treated paper was then passed round a heated dryer at 100°C (4 minutes dwell time), allowed to condition for 10 minutes and then tested for static coefficient of friction using the apparatus which is now briefly described:

The unit consists of a flat bed upon which the samples are placed for testing. On top of the sample is placed a 1 (one) kilogram weight. When the unit is started, an electric motor drives a rod to push the weight along the flat bed.

The effort required to move the weight is absorbed by a spring which has a numerical scale reading from 0-100. When the weight starts to move, the drive motor is switched off and a reading taken on the scale. The drive rod is returned to the starting position before the next test.

The static coefficient of friction of Example 56 was found to be 0.47. Three further determinations gave results between 0.46 and 0.49. The mean static coefficient of friction for all four determinations was 0.47.

Table V          (Part 1 of 2)

| Ex. | (i) Starch Trade Name | (ii) % by Weight Starch Conc. | (iii) Retention Aid | (iv) % by Weight Retention Aid | (v) Rosin Ester/ Viscosity Depressant Blend Example | (vi) % Size by Weight | (vii) % Size Solids to Fibre | (viii) Static Co-efficient of friction - spread of Results | Static Co-efficient of friction - average of four Exp. |
|---|---|---|---|---|---|---|---|---|---|
| | Untreated Paper | | – | – | – | – | – | 0.26-0.28 | 0.27 |
| 57 | R. K20 | 5% | PAC | 0.02 | 9 | 0.17 | 0.07 | 0.44-0.49 | 0.45 |
| 58 | H. SP50 | 10% | PAC | 0.02 | 9 | 0.17 | 0.06 | 0.40-0.48 | 0.44 |
| 59 | S. 140 | 10% | PAC | 0.02 | 10 | 0.17 | 0.05 | 0.40-0.48 | 0.45 |
| 60 | H. SP50 | 10% | PAC | 0.02 | 10 | 0.17 | 0.06 | 0.42-0.46 | 0.44 |
| 61 | S. 140 | 10% | PAC | 0.02 | 11 | 0.17 | 0.06 | 0.47-0.50 | 0.48 |
| 62 | R. K20 | 5% | PAC | 0.02 | 11 | 0.17 | 0.08 | 0.44-0.48 | 0.45 |
| 63 | S. 140 | 10% | PAC | 0.02 | 12 | 0.17 | 0.06 | 0.40-0.41 | 0.50 |
| 64 | H. SP50 | 10% | PAC | 0.02 | 12 | 0.17 | 0.08 | 0.44-0.46 | 0.45 |
| 65 | S. 140 | 10% | PAC | 0.02 | 13 | 0.17 | 0.06 | 0.42-0.46 | 0.43 |
| 66 | R. K20 | 5% | PAC | 0.02 | 13 | 0.17 | 0.05 | 0.40-0.46 | 0.44 |
| 67 | S. 140 | 10% | PAC | 0.02 | 14 | 0.17 | 0.09 | 0.38-0.45 | 0.44 |
| 68 | R. K20 | 5% | PAC | 0.02 | 14 | 0.17 | 0.09 | 0.39-0.47 | 0.44 |
| 69 | S. 140 | 10% | PAC | 0.02 | 15 | 0.17 | 0.11 | 0.41-0.45 | 0.42 |
| 70 | R. K20 | 5% | PAC | 0.02 | 15 | 0.17 | 0.11 | 0.46-0.47 | 0.47 |

EP 0 296 729 A1

EP 0 296 729 A1

Table V          (Part 2 of 2)

| Ex. | (i) Starch Trade Name | (ii) % by Weight Starch Conc. | (iii) Retention Aid | (iv) % by Weight Retention Aid | (v) Rosin Ester/ Viscosity Depressant Blend Example | (vi) % Size by Weight | (vii) % Size Solids to Fibre | (viii) Static Co-efficient of friction - spread of Results | Static Co-efficient of friction - average of four Exp. |
|---|---|---|---|---|---|---|---|---|---|
| 71 | S. 150 | 10% | PAC | 0.02 | 16 | 0.17 | 0.11 | 0.43-0.46 | 0.44 |
| 72 | R. K20 | 5% | PAC | 0.02 | 16 | 0.17 | 0.10 | 0.40-0.49 | 0.45 |
| 73 | H. SP50 | 10% | – | – | 9 | 0.17 | 0.10 | 0.36-0.38 | 0.37 |
| 74 | H. SP50 | 10% | BC 768 a | 0.04 | 9 | 0.17 | 0.10 | 0.42-0.44 | 0.44 |
| 75 | H. SP50 | 10% | L 6504 b | 0.04 | 9 | 0.17 | 0.10 | 0.42-0.46 | 0.45 |
| 76 | H. SP50 | 10% | P. SK c | 0.04 | 9 | 0.17 | 0.10 | 0.44-0.46 | 0.45 |

C. = Cato

H. = Hicat

R. = Resistamyl

S. = Stalok

```
C. = Cato

H. = Hicat

R. = Resistamyl

S. = Stalok


(a) = Urea/formaldehyde condensate (British
         Industrial Plastics)
(b) = Melamine/formaldehyde condensate
         British Industrial Plastics)
(c) = Modified polyethyleneimine (BASF)
```

## Claims

1. A process for the surface sizing of paper or like products, characterised in that paper is treated, after partial drying,· with a composition comprising a polyoxyalkylene ester of a fortified rosin, whereby the coefficient of friction of the treated paper surface is increased.

2. A process according to claim 1, wherein the treatment composition comprises the product obtained by reacting rosin with a dienophile and subjecting the resultant fortified rosin to esterification with a polyoxyalkylene glycol.

3. A process according to claim 2, wherein the rosin is selected from one or more of gum rosin, wood rosin and tall oil and the components are subjected to fortification without being separated.

4. A process according to claim 2 or 3, wherein the rosin subjected to fortification is gum rosin.

5. A process according to claim 2, 3 or 4, wherein the dienophile is selected from $\alpha,\beta$-unsaturated organic acids and the anhydrides of such acids.

6. A process according to claim 5, wherein the dienophile comprises from 3 to 10 carbon atoms.

7. A process according to claim 5 or 6, wherein the dienophile is selected from maleic acid, maleic anhydride and fumaric acid.

8. A process according to any of claims 2 to 7, wherein the amount of dienophile which is reacted with rosin is in the range from 3% to 20% by weight based upon the weight of the rosin.

9. A process according to claim 8, wherein the amount of dienophile is in the range from 3% to 18% by weight based upon the weight of the rosin.

10. A process according to claim 9, wherein the amount of dienophile is in the range from 3% to 11% by weight based upon the weight of the rosin.

11. A process according to any of claims 2 to 10, wherein the rosin is reacted with the dienophile so as to effect at least partial fortification of the rosin.

12. A process according to any of claims 2 to 11, wherein the product obtained by reacting the rosin with the dienophile is subjected to esterification without separation.

13. A process according to any preceding claim, wherein the fortified rosin is esterified by reaction with at least one polyoxyethylene glycol, polyisopropylene glycol, polypropylene glycol or with a mixture thereof.

14. A process according to claim 13, wherein the fortified rosin is esterified by reaction with one or more polyoxyethylene glycols having an average molecular weight in the range from 200 to 1000.

15. A process according to claim 14, wherein the one or more polyoxyethylene glycols have an average molecular weight in the range from 400 to 600.

16. A process according to any preceding claim, wherein the fortified rosin is esterified by reaction with a polyalkylene glycol component have a degree of alkoxylation in the range from 4.5 to 23.0.

17. A process according to any preceding claim, wherein the amount of polyalkylene glycol used is at least sufficient to produce the monoester of the fortified rosin acid.

14

18. A process according to any preceding claim, wherein the composition used to treat the paper includes an inert solvent or diluent in an amount sufficient to reduce the viscosity of the product of the esterification reaction.

19. A process according to claim 18, wherein pine oil, rosin oil or a polyalkylene glycol is used as a viscosity depressant for dissolving or diluting the esterified fortified rosin product for use.

20. A process according to any preceding claim, wherein the treatment composition is applied to the paper by means of electronic spraying, curtain coating or the calender stack water-box.

21. A process according to any preceding claim, wherein the treatment composition is applied to the paper by means of the size press.

22. A process according to claim 21, wherein the treatment composition is metered continuously into the size press circuit.

23. A process according to any preceding claim, wherein a composition comprising a starch is also applied to the paper.

24. A process according to claim 23, wherein the starch is cationic.

25. A process according to claim 23 or 24, wherein the starch is a quaternised maize starch.

26. A process according to any of claims 23 to 25, wherein the amount of starch employed in the treatment is sufficient to provide a pick-up in the range from 3.0% to 12% by weight of starch, based upon the dry weight of the paper.

27. A process according to any preceding claim, wherein the fortified rosin ester composition is used to treat the paper in conjunction with a retention aid, whereby superior sizing is imparted to the paper.

28. A process according to claim 27, wherein the retention aid is selected from polyaluminium chlorides, polyamide/epichlorohydrin resin condensates, urea/formaldehyde resin condensates, modified polyether imines, polyacryl-amides, melamine/formaldehyde condensates, dicyandiamide/formaldehyde condensates, dimethylamine/epichlorohydrin/ethylenediamine polymers and papermakers alum.

29. A process according to claim 28, wherein the retention aid is a polyaluminium chloride having the formula:

$$Al(OH)_x(Cl)_y$$

wherein x has a value in the range from 1.35 to 1.65 and y = 3-x or the formula:

$$Al(OH)_x(SO_4)_y(Cl)_z \cdot$$

wherein x has a value in the range from 1.35 to 1.65, y has a value in the range from 0.08 to 0.15 and z = 3-(x+y).

30. A process according to any of claims 27 to 29, wherein the retention aid is metered into the size press circuit.

31. A process according to any of claims 27 to 30, wherein the retention aid is used in an amount sufficient to maintain the ratio of the dry weight of the retention aid to the dry weight of the fortified rosin ester within the range from 1:1 to 1:20.

32. A process according to claim 31, wherein the ratio is maintained in the range from 1:1 to 1:10.

33. A process according to any preceding claim, wherein the treatment composition is applied in an amount sufficient to provide a pick-up in the range from 0.02% to 1.0% by weight of ester reaction product based upon the dry weight of the treated paper.

34. A process according to any preceding claim, wherein the paper treated is unalumed paper or unalumed paper board.

35. Paper or paper board, when subjected to treatment by a process as defined in any preceding claim.

36. A method of manufacture of a chemical composition suitable for use in the surface treatment of paper and paper board and comprising the product obtained by subjecting rosin fortified by reaction with a dienophile to esterification with a polyoxyalkylene glycol, characterised in that

(a) a rosin component selected from gum rosin, wood rosin, tall oil and mixtures thereof is fortified by reaction with a dienophile selected from α,β- unsaturated organic acids and anhydrides thereof so as to effect at least partial fortification of the rosin component and

(b) subjecting the resulting fortified rosin product to reaction, optionally in the presence of an esterification catalyst, with a polyalkylene glycol at a temperature in the range from 50° to 300°C under an inert atmosphere for a period of time in the range from 0.5 to 5 hours.

37. A method according to claim 36, wherein the amount of dienophile which is reacted with rosin is in the range from 3% to 20% by weight based upon the weight of the rosin.

38. A method according to claim 36 or 37, wherein the rosin is reacted with the dienophile so as to effect at least partial fortification of the rosin.

39. A method according to claim 36, 37 or 38, wherein the fortified rosin is esterified by reaction with at least one po lyoxyethylene glycol, polyisopropylene glycol, polypropylene glycol or with a mixture thereof.

40. A method according to any of claims 36 to 39, wherein the amount of polyalkylene glycol used is at least sufficient to produce the monoester of the fortified rosin acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | EP-A-0 218 388 (ALBRIGHT & WILSON) * Abstract; pages 2,3; page 4, paragraph 4; page 5, last three paragraphs; page 6; examples 1-17 * | 1-17,27 ,28,36-40 | D 21 D 3/00 D 21 H 3/34 D 21 H 3/28 C 09 F 1/04 |
| A | GB-A-2 155 942 (ALBRIGHT & WILSON) * Page 1, line 39 - page 2, line 44; pages 3-5 * | 1-17,36 -40 | |
| A | US-A-2 775 528 (F.R. CHARLES et al.) * Columns 1,2 * | 1,20,33 -35 | |
| A | US-A-3 577 402 (R.A. DORBRANSKY) * Abstract * | 18 | |

|  | TECHNICAL FIELDS SEARCHED (Int. Cl.4) |
|---|---|
|  | C 09 F D 21 H |

The present search report has been drawn up for all claims

| Place of search | Date of completion of the search | Examiner |
|---|---|---|
| THE HAGUE | 13-09-1988 | NESTBY K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)